# EUROPÄISCHE PATENTSCHRIFT

(11) **EP 3 695 708 B1**
(45) Veröffentlichungstag und Bekanntmachung des Hinweises auf die Patenterteilung: **06.04.2022**
(21) Anmeldenummer: 20455001.6
(22) Anmeldetag: 14.02.2020
(51) Int. Cl.: A01G 25/09, A01M 7/00

(54) **MOBILE BEWÄSSERUNGSANLAGE FÜR DIE LANDWIRTSCHAFT**
MOBILE WATERING SYSTEM FOR AGRICULTURE
INSTALLATION D'IRRIGATION MOBILE POUR L'AGRICULTURE

(30) Priorität: 15.02.2019 AT 501162019
(43) Veröffentlichungstag der Anmeldung: 19.08.2020
(73) Patentinhaber: Unger, Georg, 1090 Wien (AT)
(72) Erfinder: Unger, Georg, 1090 Wien (AT)
(74) Vertreter: Patentanwälte Barger, Piso & Partner

(56) Entgegenhaltungen:
- EP-A1- 0 391 889
- AU-B2- 501 208
- DD-A1- 152 895
- DE-A1- 3 431 260
- FR-A1- 2 450 035
- FR-A1- 2 560 533

## Beschreibung

Die Erfindung betrifft eine mobile Bewässerungsanlage für die Landwirtschaft entsprechend dem Oberbegriff das Anspruches 1 und der AT 385 392 des Anmelders.

Aus dieser Druckschrift ist eine mobile Bewässerungsanlage mit einem lenkbaren Fahrgestell bekannt, die seitliche Ausleger aufweist. Diese Ausleger bestehen aus jeweils drei miteinander verbundenen Teilarmen, von denen in Transportstellung je ein Teilarm auf das Fahrgestell einklappbar ist, und je zwei weitere Teilarme darauf gestapelt werden können. Die Probleme beim Wenden der Anlage am Ende einer Zeile und der aufwendige Aufbau stehen den Vorteilen einer in der Breite gut regelbaren Bewässerungsintensität gegenüber.

Die DD 152 895 offenbart eine Vorrichtung zum Umsetzen von Beregnungsmaschinen quer zu deren Arbeitsrichtung, fällt somit nicht unter die mobilen Bewässerungsanlagen im Sinne der Erfindung. Dazu ist vorgesehen, dass die Beregnungsvorrichtung in einzelne (untereinander praktisch gleich aufgebaute) Segmente zerlegt wird, und dass diese Segmente Stück für Stück transportiert werden. Dabei wird an einem Endbereich eines solchen Segmentes eine Steckachse mit Rädern angebracht, die ein Verfahren quer zur Arbeitsrichtung erlaubt. Das andere Ende des Segmentes wird angehoben und ruht auf einer Transportvorrichtung (Traktor), die auch das Verfahren durchführt. Nachdem alle Segmente entsprechend verschoben worden sind, werden sie wieder zusammengebaut und sind erneut arbeitsbereit. Der Arbeitsaufwand ist enorm, und ein Versetzen in anderer Richtung als quer zur Arbeitsrichtung ist mit dieser Vorrichtung nicht möglich.

Die DE 356 073 hat insofern Ähnlichkeiten mit der DD 152 895, als die beim Betrieb zum Bewegen der Anlage dienenden Räder um Ihre Hochachse gedreht werden können, sodass auch ein seitliches Verfahren zwischen verschiedenen Arbeitsplätzen möglich ist. Wie das im Detail geschieht, ist aber nicht ausgeführt, die Nachteile sind die Gleichen.

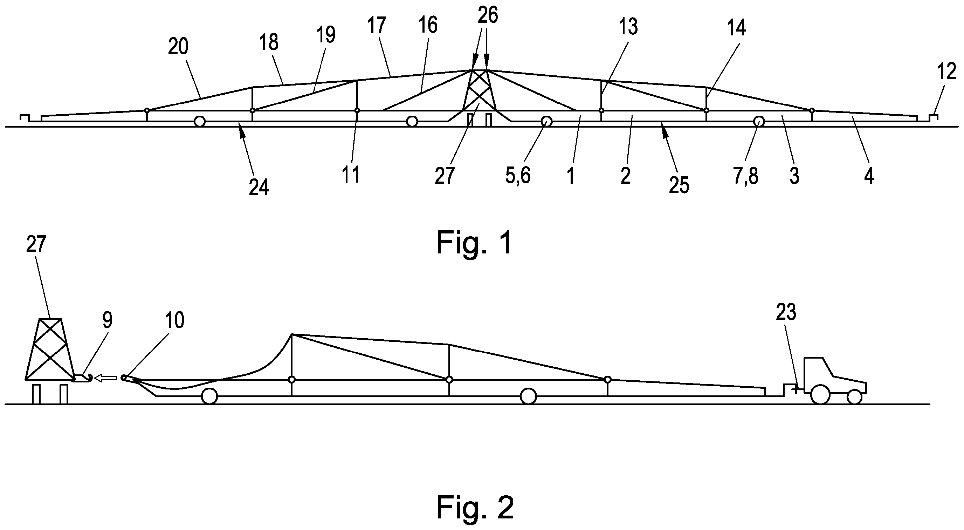

Die EP 391 889 sieht, ähnlich der erstgenannten Druckschrift, einen Wagen mit seitlichen Auslegern vor, die beim Verfahren zwischen zwei Arbeitsstellen abgesenkt und, wie ein Vergleich der Figs. 2a und 2b zeigt, nebeneinander bzw. aufeinander liegend gefaltet werden können, so dass die Teilsegmente dann in Längsrichtung des Wagens verlaufen, die Nachteile sind die gleichen wie bei der AT 385 392.

Unter mobile Bewässerungsanlage wird in der Anmeldung verstanden, dass diese nach erfolgter Beregnung eines Gebietes, z.B. eines Feldes, mit einem Zuggerät, beispielsweise einem Traktor, über Wege und Straßen zum nächsten Einsatzort transportiert wird. Im Stand der Technik sind dazu Großregner bekannt, die eine mehrere Meter durchmessende Schlauchhaspel aufweisen, und an deren oberster Position, dem Kopf, ein Kreiselregner angebracht ist, der bis zu hundert Meter im Durchmesser beregnet. Dieses Gefährt wird durch einen Wassermotor, betrieben vom Gießwasser, mit einer Geschwindigkeit von einigen Dutzend Metern pro Stunde durch das Feld gezogen, wobei sich der Schlauch auf der Haspel aufrollt.

Der große Nachteil dieser Geräte ist, dass das Gefährt mit seinem mit Wasser gefüllten Schlauch mit einem großen Gewicht (mehrere Tonnen) durch das bereits beregnete Gebiet fährt und so vom Einsinken und Umstürzen bedroht ist. Um das möglichst zu vermeiden, wird die pro Quadratmeter aufgebrachte Menge an Wasser so gering gehalten, wie es die Umstände (Art des Bodens, eventuelle, wenn auch geringe Neigung, etc.) erfordern. Das bringt es mit sich, dass im heißen Klima eine viel zu geringe Durchfeuchtung erreicht wird, die dennoch zu einem unangenehm hohen Anteil wieder verdunstet.

Eine andere Lösung sieht vor, dass die Haspel am Feldrand verbleibt, der Regner samt Schlauch ausgezogen wird und im Betrieb von der Haspel zu dieser zurückgezogen wird. Dabei wird zwar die Problematik des aufgeweichten Fahrweges im Wesentlichen vermieden, wenn auch die Reaktionskräfte des Wasserstrahls wegen der geringeren Masse des Sprühers kritisch werden können.

Ein beiden Vorrichtungen gemeinsames Problem liegt in der starken Abhängigkeit der Bewässerungsqualität vom Wind. Bereits ab 10 km/h Windgeschwindigkeit kommt es zu Unregelmäßigkeiten der Beregnung, die sich auf das Resultat des Bewässerns extrem nachteilig auswirken. Dazu kommt, dass der Strahl sich unter Umständen nicht so fein verteilt, wie es bei frisch sprießenden Pflanzen erforderlich ist und diese beschädigt. Ein weiteres Problem beider Vorrichtungen ist die Notwendigkeit, an der Düse einen entsprechenden Druck aufzubauen, um zur angestrebten Wurfweite zu kommen, wobei aber in der Zuleitung ein Druckabfall von etwa 0,8 bar/100 m Schlauchlänge auftritt. Damit wird der Energiebedarf enorm und es muss ein extrem hochfester Schlauch verwendet werden, der wiederum teuer und schwer ist.

Andere, nicht als mobil angesehene Beregnungsgeräte sind solche, die sich zwar über das Feld bewegen, aber ohne vollständige Demontage (wie die DD 152 895) nicht von Feld zu Feld transportieren lassen. Sie weisen zahlreiche, miteinander gelenkig verbundene Elemente mit einer gesamten Länge von bis zu mehreren hundert Metern auf, die sich auf Rädern mit einer Geschwindigkeit von ebenfalls einigen Dutzend Metern pro Stunde quer zu ihrer Längserstreckung über das Feld bewegen. Die Abgabe des Wassers erfolgt dabei über zahlreiche kleine, nach unten gerichtete, Kreisel, die jeweils nur einen kleinen Streifen beregnen, sodass der Pfad der Räder relativ trocken gehalten werden kann, womit aber eine größere Eindringtiefe des Wassers nicht erreichbar ist. Die "Fixierung" der Anlage, die leicht bis zu einer Million Euro kosten kann, an ein einziges Feld, stellt allerdings eine große Kapitalbindung dar.

Aus AT 505 274 des Anmelders ist eine mobile Bewässerungsanlage mit einem lenkbaren Fahrgestell bekannt, bei der Ausleger mit fix verbundenen Teilarmen über einen turmartigen Aufbau und Abspannseile auf dem Fahrgestell der Anlage montiert sind. Bei dieser Lösung müssen für den Transport der mobilen Bewässerungsanlage zum Feld und vom Feld die Ausleger in ihre Teilarme zerlegt, und die Abspannseile demontiert, und auf ein gesondertes Transportfahrzeug verladen werden. Ebenso müssen die Teilarme vor dem Wenden der mobilen Bewässerungsmaschine am Feldende zerlegt werden, soferne es Hindernisse wie Bäume, befahrene Straßen oder Strommasten gibt.

Aus der EP 191 637 A2, der DE 35 12 992 A1 und der DE 3541130 A1 sind nicht gattungsgemäße Vorrichtungen zum Ausbringen von flüssigem oder körnigem Gut, wie Pestizide und Ähnliches bekannt, die an Traktoren befestigt werden können und beim Befahren von Straßen in Fahrtrichtung zusammengeklappt sind und über dem Boden schweben, sodass ein Transport möglich ist. Beim Betrieb im Feld werden sie ausgeklappt, sodass die einzelnen Segmente fluchtend und quer zur Fahrtrichtung angeordnet sind. Auch dabei kommen sie mit dem Boden nicht in Berührung, was zufolge ihres geringen Gewichtes auch nicht notwendig ist. Die Gesamtbreite liegt dann in der Regel bei maximal knapp unter zwanzig Meter, einschließlich des sie tragenden Traktors, die größte erzielbare Breite des bearbeiteten Streifens liegt bei 36 Meter, ist somit wesentlich kleiner als die der Beregnungsgeräte. Die Fahrgeschwindigkeit im Feld beträgt um die 20 km/h, ist somit um Größenordnungen größer als die der Beregnungsgeräte.

In diese Kategorie fällt die Vorrichtung der FR 2 408 290, sie dient zum Ausbringen von Pestiziden und Ähnlichem und wird quer zur Fahrtrichtung angeordnet hinter einem Traktor hergezogen, wobei sie am freien Ende auf einem Fahrgestellt rollt. Sie ist somit um Größenordnungen kleiner als Beregnungsvorrichtungen weist alle genannten Nachteile dieser Kategorie auf.

Es besteht somit ein Bedarf an einer Bewässerungsanlage, die einerseits in der Lage ist großflächig und tiefgründig zu bewässern, andererseits ohne großen Aufwand von Feld zu Feld verfahren werden kann.

Diese Aufgabenstellung wird mit den kennzeichnenden Merkmalen des Patentanspruches 1 gelöst. Mit anderen Worten, weist eine erfindungsgemäße Beregnungsanlage zwei an einem Fahrgestell montierbare Ausleger mit jeweils zumindest zwei, bevorzugt vier, während des Beregnens fix, aber zum Verfahren zueinander schwenkbare und/oder miteinander lösbar verbundene Teilarme und zwei schwenkbare Seilmasten für Abspannseile für die Teilarme auf. Der innerste Teilarm ist als Transportwagen, zum Verfahren quer zur Arbeitsrichtung, mit zwei Querträgern, Rädern und Anhängevorrichtung ausgeführt, auf den die weiteren Teilarme aufgeladen werden können. Am Fahrgestell ist auch eine Art Turm vorgesehen, an dem die Abspannseile lösbar montiert werden können.

Damit wird der Transport der Ausleger zum und vom Feld wesentlich vereinfacht, am Feld erfolgt das Verbinden der Ausleger mit dem Fahrgestell und der Aufbau der Teilarme. Fix montiert bedeutet, dass die Teilarme im Betrieb eine Einheit bilden, die sich nur elastisch deformiert aber keine eigentliche Relativbewegung der einzelnen Teilarme zueinander vollführt. Mit dieser Lösung werden im Vergleich zum Stand der Technik einerseits größere Auslegerbreiten erreicht, andererseits wird auch der Transport, der Auf- und Abbau sowie das Rangieren auf dem Feld erleichtert.

Um zu vermeiden, dass die Seile und die Seilmasten am Ausleger jeweils für den Transport demontiert, und danach wieder aufmontiert werden müssen, sind in einer vorteilhaften Ausgestaltung der Erfindung die Seilmasten jedes Auslegers, bei vier Teilarmen sind es zwei, auf dem zweiten Teilarm montiert, und zwar gegebenenfalls je am inneren und am äußeren Ende des zweiten Teilarmes, mit Gelenken mit Drehachsen jeweils quer zur Längsachse des Teilarmes, womit die Seilmasten für den Transport mitsamt den darauf montierten Seilen entlang des Teilarmes nach innen geklappt werden können, und nach dem Transport zum Aufbau wieder auseinandergeklappt werden können, sodass die Seilmasten und die darauf montierten Seile beim Transport allesamt auf dem zweiten Teilarm verbleiben und nicht demontiert werden müssen. Nur das Lösen und erneute Befestigen am Turm des Fahrgestells ist notwendig.

Für das Rangieren der Ausleger am Feldende, wenn Hindernisse wie Bäume, Straßen oder Strommasten ein Wenden der mobilen Bewässerungsmaschine in aufgebautem Zustand nicht zulassen, können in einer vorteilhaften Weiterbildung die aus bevorzugt vier fix verbundenen Teilarmen bestehenden Ausleger durch Kuppelvorrichtungen auf dem innersten Teilarm vom Fahrgestell, üblicherweise eine landwirtschaftliche Zugmaschine, auf der der Turm befestigt ist, abgekuppelt werden, wobei die Ausleger dann selbständig auf Rädern, die jeweils auf dem ersten und gegebenenfalls dem dritten Teilarm montiert sind, auf dem Boden stehen. Mittels einer auf dem äußersten Teilarm montierten Anhängevorrichtung können die Ausleger dann jeweils als Ganzes mit einem Traktor quer zur Fahrtrichtung der mobilen Bewässerungsmaschine in die nächste Spur rangiert werden, um sie dort an das überstellte Fahrgestell wieder anzukuppeln. Ein Zerlegen der Ausleger in ihre Teilarme ist damit beim Überstellen der mobilen Bewässerungsanlage auf dem Feld in die nächste Spur nicht erforderlich.

Die Erfindung ist in der beiliegenden Zeichnung rein schematisch, dargestellt, dabei zeigt
die Fig. 1 eine erfindungsgemäße Bewässerungsanlage in Betriebskonfiguration,
die Fig. 2 das Rangieren eines abgekuppelten Auslegers mit einem Traktor,
die Fig. 3 einen zweiten Teilarm mit zwei Seilmasten und ein Detail und die Fig. 4 in zwei Ansichten einen Ausleger mit zusammengeklappten Teilarmen.

Es soll vorangestellt werden, dass die gesamte hydraulische, für die eigentliche Bewässerung notwendige Ausrüstung, die von der Erfindung nicht merklich betroffen ist, in der nachfolgenden Darstellung nicht erläutert wird. Das gleiche gilt für den Fahrantrieb. Der Fachmann auf dem Gebiet der Bewässerungsanlagen kann in Kenntnis der Erfindung und des Anwendungsgebietes sowohl die Beregnungshydraulik der Vorrichtung als auch deren Antrieb ohne technische Probleme konfigurieren und dimensionieren.

**Fig. 1** stellt eine erfindungsgemäße Beregnungsanlage in Betriebskonfiguration, gesehen in Bewegungsrichtung, dar. Zwei Ausleger 24, 25, jeweils bestehend aus vier Auslegerelementen 1, 2, 3 und 4, sind über Verbindungsvorrichtungen, einen Turm 26, mit einem Fahrgestell 27 verbunden. Dieses Fahrgestell 27 weist zumindest zwei Achsen quer zur Bewegungsrichtung auf, läuft auf zumindest vier Rädern und wird passend in Bewegung versetzt, sei es durch das Beregnungswasser über einen hydraulischen Motor, sei es mittels eines eigenen Fahrmotors. Eine Lenkung kann auf übliche Weise vorgesehen sein.

Die Auslegerelemente 1-4 sind über Abspannseile am Turm 26, der auch aus zwei Einzeltürmen bestehen kann, der am Fahrgestell 27, in Ausnahmefällen innen am jeweils innersten Auslegerelement 1 umklappbar vorgesehen ist, befestigt. Am zweiten Auslegerelement bzw. Teilarm sind umklappbare Seilmasten 13, 14 vorgesehen, die ein Abspannen der Teilarme 1-4 mittels Spannseilen 16-20 ermöglichen. Die Auslegerelemente 1-4 berühren im Betrieb den Boden nicht, es weisen aber die Teilarme 1 und 3 jeweils eine Achse mit zwei Rädern 5-8 auf, wobei die beiden Achsen parallel zur Bewegungsrichtung, also quer zu den Achsen des Fahrgestells, verlaufen. Auch die Räder 5-8 berühren den Boden bzw. die Pflanzen im Beregnungsbetrieb nicht.

Wenn nun am Ende einer Zeile rangiert werden muss, weil das Gelände eine Wende nicht zulässt, so ist es, wie in **Fig. 2** schematisch dargestellt, ohne großen Aufwand möglich, die Spannseile vom Turm 26 abzuhängen (wenn der Turm am inneren Ende des innersten Teilarmes 1 vorgesehen ist, ist dies nicht notwendig) und die unveränderten Teilarme 1-4 vom Fahrgestell 27 durch Lösen der Kupplungsvorrichtung 9, 10, abzunehmen und mittels der Räder 5-8 passend zu verfahren. Die Räder können bevorzugt paarweise auf gemeinsamen Achsen angeordnet sein, aber auch, wie bei Fahrzeugen mit Torsionsfedern bekannt, auf knapp nebeneinander angeordneten Achsen. Der Begriff "Achse" wird sowohl für die linienförmige Drehachse als auch für die technische Ausbildung der Achse verwendet.

Zum Verfahren weist das Element 4 an seinem freien Ende eine Kupplung 12 auf, die mit einer Kupplungsvorrichtung eines landläufigen Traktors zusammenwirken kann. Es kann eine derartige Kupplung auch zusätzlich am fahrgestellseitigen Ende des Elementes 1 angebracht sein, um kompliziertere Manöver zu vereinfachen. Dies ist wegen des geringen Platzbedarfs und der geringen Kosten derartiger Kupplungen bzw. deren rascher Montage am Feld bei Bedarf kein Problem.

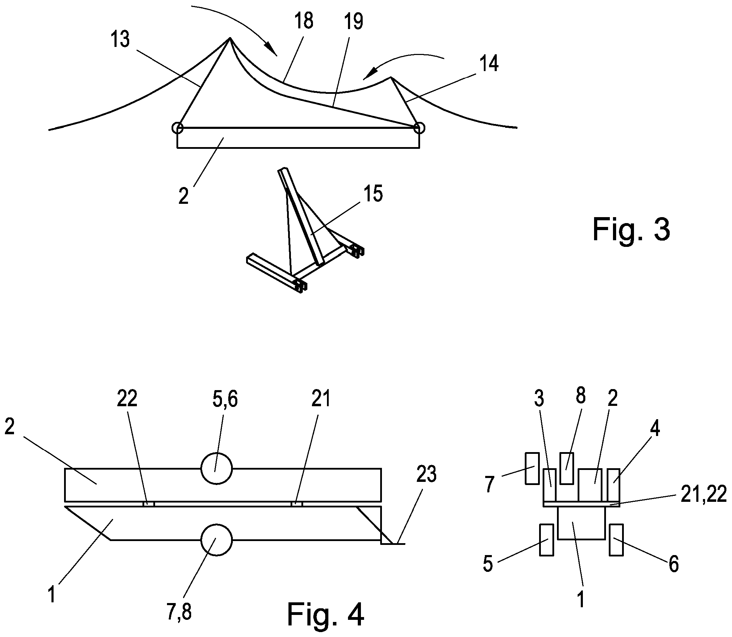

Wenn am Ende des Beregnens die Anlage zu einem anderen Feld verfahren werden soll, so sind zuerst die Abspannseile zu entfernen, was entweder durch Aufrollen auf fixen Haspeln (nicht dargestellt) die am Seilmast 13, 14 oder am jeweiligen Element 1-4 angeordnet sind **(****Fig. 3****),** erfolgt, oder durch Aushängen der Seile und Sichern am Seilmast oder den Teilarmen. Die Seilmasten werden umgeklappt und am Teilarm fixiert. Sodann wird die Verbindung 9, 10 zwischen dem Fahrgestell 27 und dem Teilarm 1 gelöst, und in der Folge werden die Teilarme 2-4 im Zick-Zack auf das Element 1 gefaltet, was durch hydraulische (in diesem Fall Öl-Hydraulik vom Traktor oder, wenn vorhanden, dem Fahrmotor vom Fahrgestell 27 versorgt) Zylinder-Kolben-Einrichtungen, oder händisch, gegebenenfalls mit Flaschenzügen, bewerkstelligt wird, wie aus der rein schematischen **Fig. 4** ersichtlich.

Da bevorzugt zumindest die wesentlichsten Teile der Auslegerelemente 2-4 aus Aluminium bestehen und ihre Massen jeweils etwa 50 kg betragen, ist diese Manipulation ohne große Schwierigkeiten durchführbar. Das Auslegerelement 1 besteht im Gegensatz dazu bevorzugt aus Stahl, da es einerseits nicht so manipuliert werden muss wie die anderen, andererseits aber im Fahrbetrieb doch vergleichsweise beträchtlichen mechanischen Beanspruchungen ausgesetzt ist.

Es ist noch darauf hinzuweisen, dass im Falle eines Zusammenklappens das Vorsehen waagrechter Klappachsen vermieden werden soll, da die einzelnen Elemente bis zu rund 9 m Länge aufweisen und daher beim Hochklappen nicht nur bedeutsame Momente auftreten, sondern auch die Gefahr der Berührung eventuell vorhandener Stromleitungen besteht. Alternativ zum Klappvorgang ist die Zerlegung und das einfache Aufeinanderlegen und Fixieren der Auslegerelemente 2-4 auf das Auslegerelement 1 möglich.

Sodann kann in beiden Varianten die Anlage in drei Fuhren, das Fahrgestell 27 fährt dabei gegebenenfalls selbständig, kann aber auch gezogen oder aufgeladen werden, zum nächsten Feld gebracht und dort wieder aufgebaut werden, was in umgekehrter Reihenfolge geschieht.

Während des Fahrbetriebs laufen die zusammengefassten Teilarme 1-4 auf den Rädern 5-6 des Elementes 1 das auch über eine passende Anhängevorrichtung 23 für einen Traktor verfügt; das Fahrgestell 27 auf seinen Rädern.

Die Erfindung ist nicht auf das dargestellte und beschriebene Ausführungsbeispiel beschränkt. So können insbesondere mehr oder weniger als vier Auslegerelemente vorgesehen sein, es können auch andere Auslegerelemente Transporträder aufweisen, es kann das Fahrgestell mehr als vier Räder auf mehr als zwei Achsen besitzen, die Art des Antriebs und der Lenkung des Fahrgestells kann frei gewählt werden. Die Seilmasten können am Fahrgestell klappbar angeordnet sein, einzelne oder alle Auslegerelemente können als Gitterrahmen ausgebildet sein um an Gewicht zu sparen, und dergleichen mehr.

Die Anhängevorrichtung des Auslegerelementes 4 ist vorteilhafterweise auf die Anhängevorrichtung des zur Verfügung stehenden Zugfahrzeuges abgestimmt, wenn auch beim Verfahren am Feld ansonsten irreguläre Verbindungen wie Seile oder Ketten verwendet werden können.

In der Beschreibung und den Ansprüchen werden die Begriffe "vorne", "hinten", "oben", "unten" und so weiter in der landläufigen Form und unter Bezugnahme auf den Gegenstand in seiner üblichen Gebrauchslage, gebraucht. Das heißt, dass bei einem Fahrzeug die übliche Fortbewegungsrichtung nach "vorne" gerichtet ist, "quer dazu meint sodann eine um 90° dazu gedrehte Richtung.

Es soll noch darauf hingewiesen werden, dass in der Beschreibung und den Ansprüchen Angaben wie "unterer Bereich" eines Gehänges, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe (Breite - Länge) meint. All diese Angaben haben ihre landläufige Bedeutung, angewandt auf die bestimmungsgemäße Position des betrachteten Gegenstandes.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Zusammenfassend kann man sagen, dass die Erfindung eine mobile Bewässerungsanlage mit einem Fahrgestell 27 und zwei Auslegern 24, 25, die je mehrere, bevorzugt vier, Teilarme 1-4 aufweisen betrifft. Dabei ist zumindest ein Seilmast 13, 14 für Spannseile 16-20, am Ausleger vorgesehen. Zur leichteren Verfahrbarkeit der Anlage ist vorgesehen, dass das Fahrgestell 27 mit dem ihm benachbarten Auslegerelement 1 lösbar verbunden ist, dass dieses zwei Räder 5,6 aufweist, deren gemeinsame Achse normal zur Längsrichtung des Auslegers 24, 25 verläuft, und dass das äußerste Auslegerelement 4 über eine Anhängevorrichtung, bevorzugt eine Kupplung 12, verfügt. So kann jeder der Ausleger 24, 25 nach der Demontage vom Fahrgestell 27 ohne weitere Manipulation von einem Traktor gezogen werden.

### Bezugszeichenliste:

- 1-4: Auslegerelement(e), Teilarme
- 5-8: Räder
- 9: Kupplung am Fahrgestell
- 10: Kupplung am Ausleger
- 11: Verbindung zwischen den Auslegerelementen
- 12: Anhängevorrichtung, Kupplung
- 13,14: Seilmasten
- 15: Seilmastgelenk
- 16-20: Spannseile
- 21,22: Querträger
- 23: Anhängevorrichtung
- 24,25: Ausleger
- 26: Verbindungsvorrichtung(en)
- 27: Fahrgestell

## Patentansprüche

1. Mobile Bewässerungsanlage für die Landwirtschaft mit einem Fahrgestell (27) und zwei Auslegern (24, 25), die je mehrere, bevorzugt vier, Teilarme (1-4) aufweisen, wobei jeder Ausleger zumindest einen Seilmast (13, 14), für Spannseile (16-20) aufweist, **dadurch gekennzeichnet, dass** das Fahrgestell (27) mit dem ihm benachbarten Teilarm (1) lösbar verbunden ist, dass dieser Teilarm (1) zwei Räder (5,6) aufweist, deren bevorzugt gemeinsame Achse normal zu einer Längsrichtung des Auslegers (24, 25) verläuft, und dass der äußerste Teilarm (4) über eine Anhängevorrichtung, bevorzugt eine Kupplung (12), verfügt.

2. Bewässerungsanlage nach Anspruch 1, **dadurch gekennzeichnet, dass** am zweiten Teilarm (2), gesehen vom Fahrgestell (27) zwei Seilmasten (13, 14) montiert sind, und zwar je einer am inneren und am äußeren Ende des zweiten Teilarmes (2), mit Gelenken mit Drehachsen jeweils quer zur Längsachse des Teilarmes (2), womit die Seilmasten (13, 14) für den Transport mitsamt den darauf montierten Spannseilen (16-20) entlang des Teilarmes nach innen geklappt werden können, und nach dem Transport zum Aufbau wieder aufgeklappt werden können.

3. Transportabler Ausleger (24, 25) einer mobilen Bewässerungsanlage nach Anspruch 1 oder 2, mit vier Teilarmen, **dadurch gekennzeichnet, dass** ein endständiger Teilarm (1) eine Kuppelvorrichtung (10) aufweist, mit denen er an Kuppelvorrichtungen (9) an einem Fahrgestell (27) lösbar verbunden werden kann, dass auf diesem, dem ersten, und am dritten Teilarm (1,3) Räder (5,6, 7,8) montiert sind, womit die Ausleger (1-4) im vom Fahrgestell (27) abgekuppelten Zustand selbständig auf dem Boden stehen, und dass auf dem anderen endständigen Teilarm (4) Anhängevorrichtungen (12) angebracht sind, mit denen die Ausleger (1-4) jeweils als Ganzes von einem Traktor gezogen werden können.

## Claims

1. Mobile irrigation system for agriculture, comprising a chassis (27) and two cantilevers (24, 25) which each have a plurality of, preferably four, partial arms (1-4), each cantilever having at least one cable mast (13, 14) for tensioning cables (16-20), **characterised in that** the chassis (27) is detachably connected to the partial arm (1) adjacent thereto, **in that** this partial arm (1) has two wheels (5,6) of which the preferably common axis extends normally to a longitudinal direction of the cantilever (24, 25) and **in that** the outermost partial arm (4) has a hitch, preferably a coupling (12).

2. Irrigation system according to claim 1, **characterised in that** two cable masts (13, 14) are mounted on the second partial arm (2), viewed from the chassis (27), one each at the inner and outer ends of the second partial arm (2), with hinges having axes of rotation which are transverse to the longitudinal axis of the partial arm (2) in each case, whereby the cable masts (13, 14) can be folded inwards along the partial arm so as to be transported together with the tensioning cables (16-20) which are mounted thereon, and said masts can then be folded out again in order to be constructed once they have been transported.

3. Transportable cantilever (24, 25) of a mobile irrigation system according to either claim 1 or claim 2, which cantilever comprises four partial arms, **characterised in that** a terminal partial arm (1) has a coupling device (10) by means of which said arm can be detachably connected to coupling devices (9) on a chassis (27), **in that** wheels (5,6, 7,8) are mounted on this, the first, partial arm and on the third partial arm (1,3), whereby the cantilevers (1-4) stand independently on the ground when uncoupled from the chassis (27), and **in that** hitches (12) are attached on the other terminal partial arm (4), with which hitches the cantilevers (1-4) can be pulled as a whole by a tractor.

## Revendications

1. Installation d'irrigation mobile pour l'agriculture, comprenant un châssis (27) et deux bras (24, 25) qui présentent chacun plusieurs, de préférence quatre, segments de bras (1 à 4), chaque bras comportant au moins un poteau à câble (13, 14) pour des câbles de tension (16 à 20), **caractérisée en ce que** le châssis (27) est lié de façon amovible au segment de bras (1) adjacent, **en ce que** ce segment de bras (1) présente deux roues (5, 6) dont l'essieu, de préférence commun, s'étend perpendiculairement à une direction longitudinale du bras (24, 25), et **en ce que** le segment de bras (4) situé le plus à l'extérieur est doté d'un dispositif d'attache, de préférence d'un attelage (12).

2. Installation d'irrigation selon la revendication 1, **caractérisée en ce que** deux poteaux à câbles (13, 14) sont montés sur le deuxième segment de bras (2), vu depuis le châssis (27), à savoir respectivement un à l'extrémité intérieure et un à l'extrémité extérieure du deuxième segment de bras (2), avec des articulations dotées d'axes de rotation respectivement perpendiculaires à l'axe longitudinal du segment de bras (2), ce qui permet de basculer les poteaux à câbles (13, 14), avec les câbles de tension (16 à 20) qui y sont attachés, vers l'intérieur en vue du transport, le long du segment de bras, et de les relever après le transport, en vue de la mise en place.

3. Bras (24, 25) transportable d'une installation d'irrigation mobile selon la revendication 1 ou 2, **caractérisé en ce qu'**un segment de bras (1) d'extrémité présente un dispositif d'attelage (10) à l'aide duquel il peut être relié de façon amovible à des dispositifs d'attelage (9) sur un châssis (27), **en ce que** des roues (5,6 ; 7,8) sont montées sur ce segment de bras, c'est-à-dire le premier segment de bras, et sur le troisième segment de bras (1, 3), grâce à quoi les bras (1 à 4) reposent de façon autonome sur le sol lorsqu'ils sont détachés du châssis (27), et **en ce que** sur l'autre segment de bras (4) d'extrémité, sont montés des dispositifs d'attache (12) qui permettent à un tracteur de tracter les bras (1 à 4) respectivement en tant qu'ensemble.
